# NEUE EUROPÄISCHE PATENTSCHRIFT

(11) **EP 1 398 261 B2**
(45) Veröffentlichungstag und Bekanntmachung des Hinweises auf die Entscheidung über den Einspruch: **17.12.2014**
(45) Hinweis auf die Patenterteilung: 27.07.2011
(21) Anmeldenummer: 03019143.1
(22) Anmeldetag: 25.08.2003
(51) Int. Cl.: B62K 27/00, B62J 27/00

(54) **Fahrradanhänger**
Bicycle trailer
Remorque de bicyclette

(30) Priorität: 10.09.2002 DE 10242197
(43) Veröffentlichungstag der Anmeldung: 17.03.2004
(73) Patentinhaber: Zwei plus zwei GmbH, 50825 Köln (DE)
(72) Erfinder: Sutherland, Scott, Hood River Oregon (US)
(74) Vertreter: Lenzing Gerber Stute

(56) Entgegenhaltungen:
- WO-A-01/89907
- DE-U1- 29 717 162
- US-A- 5 577 746
- US-A- 5 599 033

## Beschreibung

Die Erfindung betrifft einen Fahrradanhänger mit einem Chassis.

Fahrradanhänger werden als Alternative zu Fahrradkindersitzen, die auf dem Gepäckträger oder dem oberen Rohr eines Fahrradrahmens montiert werden, immer beliebter, da Kinder darin wesentlich besser geschützt sind.

Die Fahrradanhänger müssen verschiedenen Anforderungsprofilen gerecht werden. Zunächst müssen sie eine stabile und steife Fahrgastzelle haben, damit das transportierte Kind bei Unfällen ausreichend geschützt ist. Auch muss sichergestellt sein, dass das Kind bei Unfällen nicht ohne weiteres aus dem Sitz heraus geschleudert werden kann. Des weiteren sollte der Fahrradrahmen leicht sein, um das Ziehen des Anhängers so weit wie möglich zu erleichtern. Schließlich sollte er platzsparend zu verstauen sein.

Bei einem bekannten Fahrradanhänger in Leichtbauweise, dem Modell Cougar 1 des kanadischen Anbieters Chariot, besteht der Rahmen aus einem Chassis, an dem die Räder aufgehängt und die Deichsel befestigt ist, und einer Fahrgastzelle, die vom Chassis getragen wird. Das Chassis besteht im wesentlichen aus zwei Längsträgern, die in ihrem mittleren Bereich durch zwei Querträger miteinander verbunden sind. Sowohl im vorderen Bereich als auch im hinteren Bereich sind zwischen den Trägem Rahmenelemente der Fahrgastzelle gelenkig eingehängt, wobei die Fahrgastzelle über dem Chassis zusammenfaltbar ist.

Die Seitenwände und die Rückwand des Fahrradanhängers sind Textil- und/oder Kunststoffbahnen, deren Ober- und Unterkanten um die Rahmenprofile der Fahrgastzelle und des Chassis herum gewickelt und mit Klettverschlüssen befestigt werden.

Bei einem solchen Fahrradanhänger in Leichtbauweise wird es häufig als Nachteil empfunden, dass sie aufgrund der vergleichsweise dünnen Rahmenprofile instabil wirken. Darüber hinaus sind die an den Rahmenprofilen befestigten Seiten- und Rückwände insbesondere im exponierten Bereich des Chassis einem besonderen Verschleiß durch Reibung und Stöße ausgesetzt und müssen daher verstärkt ausgebildet sein. Dies gilt vor allem für die Seitenkanten des Chassis, da der Fahrradanhänger breiter als das ihn ziehende Fahrrad ist und insbesondere der ungeübte Radfahrer die Breite des Anhängers, den er beim Fahren naturgemäß nicht im Blick hat, nicht richtig abschätzen kann. Auch im Kurven können sich diesbezüglich Probleme ergeben.

Aus der WO 01/89907 A ist ein Fahrradanhänger mit einem Chassis bekannt, an dessen seitlichen Rahmenteilen Abweiser angeordnet sind, mit denen verhindert wird, dass sich vertikale Hindernisse zwischen dem Rahmen und den Rädern einfädeln können. Dieser Anhänger zeigt alle Merkmale der Präambel des Anspruchs 1.

Der Erfindung liegt daher die Aufgabe zugrunde, einen Rahmen der eingangs genannten Art zu schaffen, der die vorgenannten Nachteile nicht besitzt.

Diese Aufgabe wird durch mindestens einen Stoßfänger gelöst, der an der Außenseite eines Rahmenteils des Chassis angeordnet ist und die Außenseite des Rahmenteils des Chassis mindestens in einer Richtung überragt.

Hierdurch wird mindestens eine Kante des durch den Stoßfänger abgedeckten Rahmenteils und des gegebenenfalls darum gewickelten Stoffes gegen Verschleiß geschützt. Hieraus resultiert der Vorteil, dass die für die Seiten- und Rückwände im Bereich des Chassis verwendeten Stoffe geringeren Verschleißanforderungen gerecht werden müssen, wodurch erhebliche Einsparungen möglich sind. Zwangsläufig bieten Stoßfänger auch eine Stabilisierung des Rahmens, sofern sie selbst eine gute Eigensteifigkeit besitzen, sowie einen Schutz gegen die Beschädigung des Rahmenteils durch Stöße. Und nicht zuletzt besteht ein optischer Vorteil darin, dass diese Schutzfunktion deutlich nach außen sichtbar wird.

In **einer** erfindungsgemäßen Ausführungsform weist der Stoßfänger eine größere Bauhöhe als das Rahmenteil auf, so dass der Stoßfänger das Rahmenteil entweder oben, unten oder sowohl oben als auch unten überragen kann. **Alternativ oder** zusätzlich wird der Stoßfänger vorzugsweise so ausgebildet und angeordnet, dass er über mindestens eine Kante oder ein Ende des Rahmenteils auskragt. Auf diese Weise kann ein umfassender Schutz eines oder aller Rahmenteile des Chassis gewährleistet werden.

Eine zusätzliche Schutzfunktion kommt dem erfindungsgemäßen Stoßfänger zu, wenn er mindestens teilweise so weit sichtlich über das Chassis vorsteht, dass er den vorderen bzw. hinteren Zwischenraum zwischen Rad und Chassis zumindest teilweise verdeckt. Hierdurch kann verhindert werden, dass Gegenstände in den Bereich zwischen Rad und Chassis gelangen und sich an der Radnabe verfangen, was im schlimmsten Fall zu einem Unfall führen kann.

Im Sinne der Leichtbauweise ist der Stoßfänger bevorzugt ein Hohlprofil, insbesondere ein Rohr, dessen Steifigkeit im Vergleich zur eingesetzten Masse vergleichsweise hoch ist.

Zum Verschluss des Hohlprofils kann mindestens eines der Enden der Stoßfänger mit einem Pfropfen verschlossen sein.

In einer anderen bevorzugten Ausführungsform übernimmt der Stoßfänger eine tragende Funktion des Chassis. Diese kann beispielsweise bei einem im vorderen Bereich des Chassis angeordneten Stoßfänger darin bestehen, dass er die Deichsel trägt, die mit dem Stoßfänger besonders bevorzugt lösbar verbunden ist. Auch kann ein im vorderen Bereich des Chassis angeordneter Stoßfänger eine Aufnahme aufweisen, die einen Anbau eines Vorderrades ermöglicht, so dass der Fahrradanhänger zu einem Babyjogger oder einem Kinderwagen umfunktioniert werden kann.

Vorteilhaft kann es auch sein, wenn ein Hohlraum im Stoßfänger als Stauraum ausgebildet ist, beispielsweise zum Verstauen von Werkzeug, Zubehörteilen für den Fahrradanhänger, Flickzeug oder ähnliches. Auch können am Stoßfänger vorzugsweise andere Anbauteile, insbesondere Reflektoren und/oder Leuchten, angeordnet sein.

Die Stoßfänger werden zum Schutz der vorderen und/oder der hinteren Ecken des Fahrradanhängers verwendet, mit denen am ehesten angestoßen wird.

Ist ein Stoßfänger einmal beschädigt, ist es von Vorteil, wenn er ohne großen Aufwand ausgetauscht werden kann. Insofern ist der Stoßfänger bevorzugt so ausgeführt, dass er lösbar mit dem Rahmenteil verbunden werden kann, beispielsweise indem er daran festgeklemmt oder damit verschraubt wird.

Schließlich kann es sinnvoll sein, den Stoßfänger im Bereich der Höhe der Radnabe anzuordnen, da hierdurch die Kippstabilität bei Querstößen auf den Stoßfänger verbessert wird.

Im Folgenden wird die Erfindung anhand von Figuren, die verschiedene bevorzugte Ausführungsbeispiele der Erfindung zeigen, näher verdeutlicht.

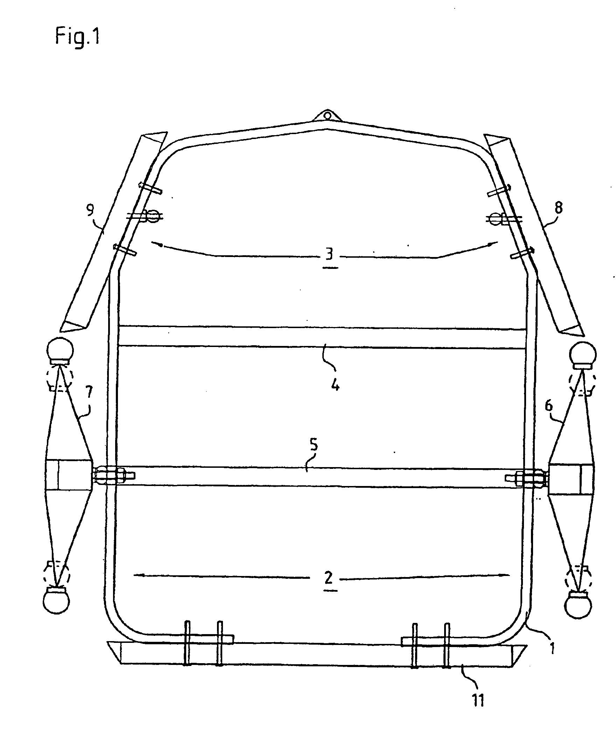

Die Figuren 1 bis 5 zeigen jeweils einen Horizontalschnitt verschiedener Chassisrahmen mit unterschiedlichen Stoßfängeranordnungen. Darin werden für gleiche oder vergleichbare Elemente oder Bereiche zur Vereinfachung die selben Bezugsziffern verwendet.

Das in Figur 1 im Schnitt dargestellte Chassis weist einen aus einem Rahmenprofil **1** gebildeten Rahmen auf. Der Rahmen besitzt in seinem hinteren Bereich **2** eine konstante Breite, während er vorne einen sich in Fahrtrichtung leicht verjüngenden Bereich **3** aufweist und das Rahmenprofil **1** an der Vorderseite des Rahmens einen stumpfen Winkel bildet. Die gerade verlaufende Rückseite des Rahmens ist nicht durchgehend, der Rahmen ist dort offen. Der Rahmen wird durch zwei Querträger **4, 5** verstärkt, wobei am hinteren Querträger **5** die Räder **6, 7** gelagert sind.

An beiden Seiten des Rahmens sind an der Außenkante des Rahmenprofils **1** im sich verjüngenden Bereich **3** Stoßfänger **8, 9** festgeschraubt. Dabei ist der sich verjüngende Bereich des Rahmens außen vollständig von den Stoßfängern **8**, **9** geschützt. Zudem kragen die Stoßfänger **8**, **9** nach hinten weit über den sich verjüngenden Bereich **3** fast bis zu den Rädern aus, so dass sie die vorderen Räume zwischen den Rädern **6**, **7** und dem Chassis verdecken. Mindestens einer der beiden Stoßfänger 8, **9** ist als Hohlrohr mit einem quadratischen Hohlraumquerschnitt als Aufnahme ausgebildet, in der eine Deichsel lösbar eingesteckt und befestigt werden kann. Weisen beide Stoßfänger **8**, **9** eine solche Aufnahme auf, können sie auch zur Aufnahme von Gabelarmen verwendet werden, zwischen deren freien Enden ein Vorderrad gelagert wird, so dass der Fahrradanhänger als sogenannter Babyjogger, nämlich als zum Joggen geeigneter Kinderwagen verwendet werden kann.

Auch die Rückseite des Rahmens ist außen durch einen mit dem Rahmenprofil **1** verschraubten Stoßfänger **11** vollständig überdeckt. Neben der Schutzfunktion übernimmt dieser Stoßfänger **11** zusätzlich eine den Rahmen stabilisierende Funktion, da er die freien Enden des Rahmenprofils **1** miteinander verbindet.

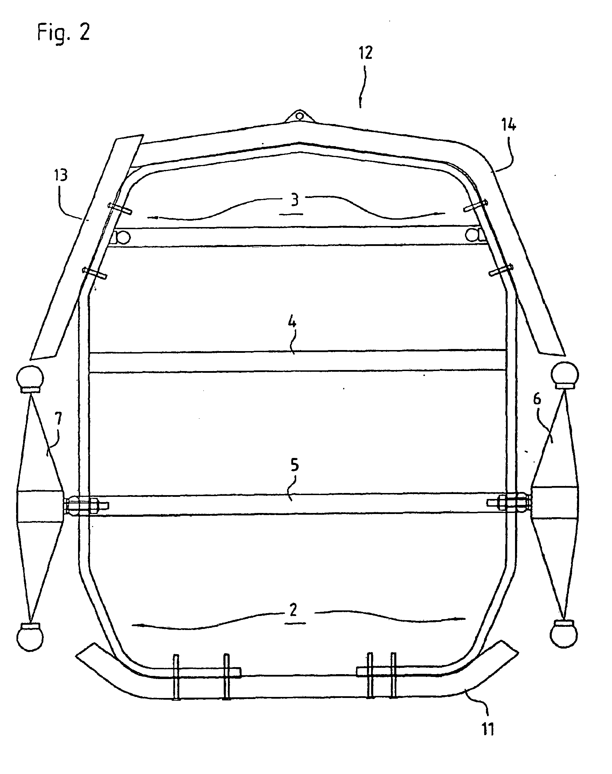

Das in Figur 2 dargestellte Chassis unterscheidet sich von dem in Figur 1 dargestellten zum einen dadurch, dass sich der Rahmen auch in seinem hinteren Bereich **2** zur Rückseite hin verjüngt und die Enden des rückwärtigen Stoßfängers **11** leicht um die Ecken herumgezogen sind. Zum anderen weist er im Gegensatz zum zuvor beschriebenen Chassis einen zweiteiligen, umlaufenden Stoßfänger **12** auf, dessen erster Teil **13** den sich verjüngenden Bereich **3** auch nach vorne überkragt. An diesen ersten Teil **13** schließt sich seitlich der zweite Teil **14** des Stoßfängers **12** an, der die gesamte Vorderseite des Rahmens sowie die andere Seite des sich verjüngenden Bereichs **3** abdeckt und ebenso wie der erste Teil **13** soweit über den sich verjüngenden Teil nach hinten auskragt, dass die Räume zwischen den Rädern **6**, **7** und dem Chassis verdeckt sind. Der erste Teil **13** des Stoßfängers **12** ist erneut als Aufnahme für eine nicht dargestellte Deichsel ausgebildet, die von vorne eingesteckt und in der Aufnahme befestigt werden kann.

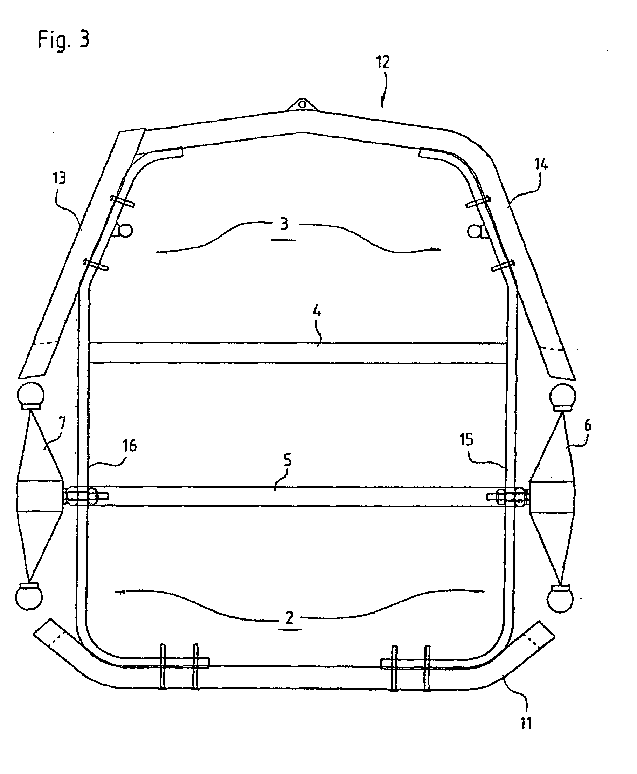

Das in Figur 3 dargestellte Chassis unterscheidet sich gegenüber dem in Figur 2 dargestellten im wesentlichen dadurch, dass der Rahmen nicht ein umlaufendes Rahmenprofil hat, sondern sowohl an seiner Vorder-, als auch an seiner Rückseite unterbrochen ist. Hier hat somit der umlaufende Stoßfänger **12** die gleiche den Rahmen stabilisierende Funktion wie der rückseitige Stoßfänger **11**; beide Stoßfänger **11**, **12** verbinden die jeweils freien Enden der den Rahmen bildenden Profile **15**, **16** miteinander. Im übrigen kragt der rückseitige Stoßfänger **11** soweit über die Ecken des Rahmens schräg nach vorne aus, dass er die hinteren Zwischenräume zischen den Rädern **6**, **7** und dem Chassis verdeckt.

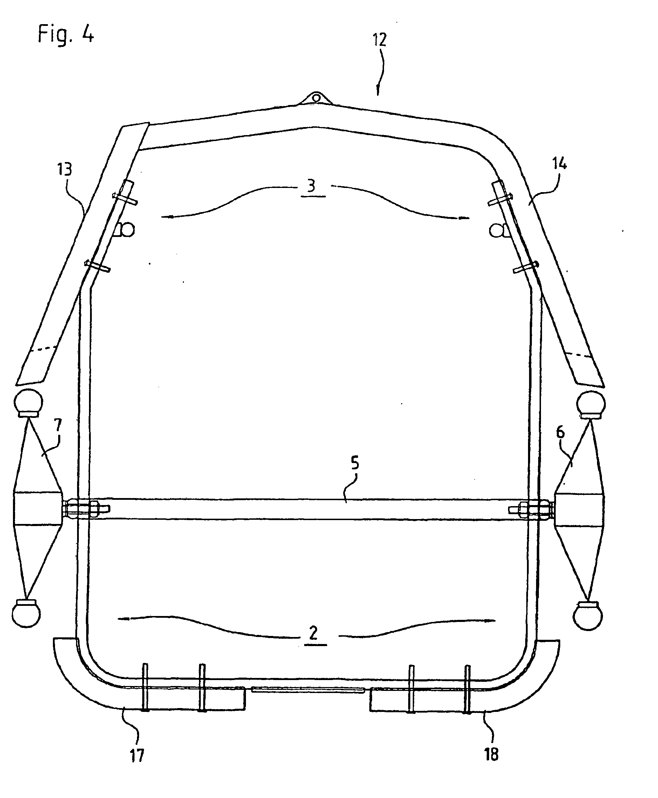

Das in Figur 4 dargestellte Chassis unterscheidet sich von dem in Figur 2 dargestellten dadurch, dass der Rahmen an seiner Rückseite umlaufend und an seiner Vorderseite unterbrochen ist. Ferner sind rückwärtig statt eines Stoßfängers zwei Stoßfänger **17**, **18** vorgesehen, die den Rahmen in einem mittleren Bereich der Rückseite nicht abdecken, aber jeweils um die Ecken herumgezogen sind. Auch weist der Rahmen nur einen Querträger **5** auf. Somit übernimmt lediglich der vordere Stoßfänger **12** eine den Rahmen stabilisierende Funktion.

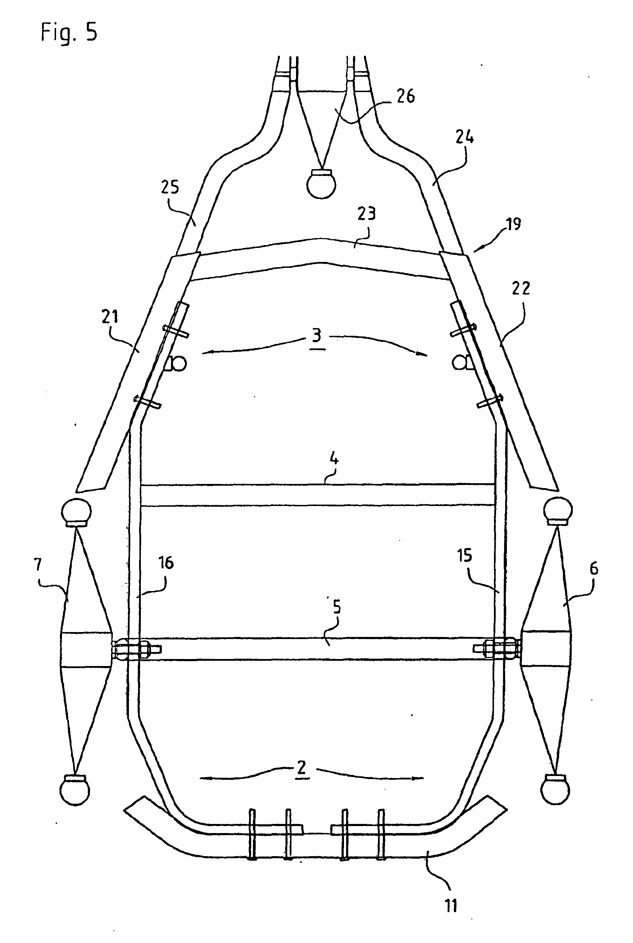

In Figur 5 ist ein zu Figur 3 ähnliches Chassis dargestellt, das sich im wesentlichen im vorderen Bereich **3** gegenüber dem zuvor beschriebenen unterscheidet. So enden die beiden Rahmenprofile **15**, **16** bereits im sich verjüngenden Bereich des Rahmens, so dass eine Rahmenvorderkante vollständig fehlt. Der vordere Stoßfänger **19** ist hier dreiteilig ausgebildet, wobei zwei Teile **21**, **22** an den nach innen abknickenden Seiten des Profilrahmens befestigt sind und über diese sowohl vorne als auch hinten hinausragen. Beide Teile **21, 22** sind an ihren vorderen Enden über ein quer verlaufendes Stoßfängerteil **23** miteinander verbunden, so dass der Stoßfänger **19** auch bei dieser Ausführungsform eine den Rahmen stabilisierende Funktion hat.

Die Stoßfängerteile **21, 22** sind beide mit einer Aufnahme für Gabelarme **24, 25** geformt, die von vorne in die Aufnahmen eingesteckt sind, und zwischen deren freien Enden ein Vorderrad **26** gelagert ist.

## Patentansprüche

1. Fahrradanhänger, insbesondere für den Personentransport, mit einem Chassis aus einem oder mehreren Rahmenprofilen, der vordere und/oder hintere Ecken aufweist, **gekennzeichnet durch** mindestens einen Stoßfänger (11; 12; 17; 18) zum Schutz der vorderen oder hinteren Ecken, der an der Außenseite des Chassis an einem Rahmenprofil (1; 15; 16) des Chassis angeordnet Ist, wobei ein vorderer Stoßfänger um die vorderen Ecken und/oder ein oder zwei hintere Stoßfänger um die hinteren Ecken herumgezogen ist/sind und der oder die Stoßfänger
- eine größere Bauhöhe als das Rahmentell (1; 15;16) aufweist/aufweisen und/oder
- über mindestens eine Kante oder ein Ende des Rahmenteils (1; 15;16) auskragt/auskragen.

2. Fahrradanhänger nach Anspruch 1, **dadurch gekennzeichnet, dass** der Stoßfänger (11; 12) mindestens teilweise so weit seitlich über das Chassis übersteht, dass er den vorderen bzw. hinteren Zwischenraum zwischen Rad (6; 7) und Chassis zumindest teilweise verdeckt.

3. Fahrradanhänger nach Anspruch 1 oder 2, **dadurch gekennzeichnet, dass** der Stoßfänger (11; 12; 17; 18) ein Hohlprofil, insbesondere ein Rohr ist.

4. Fahrradanhänger nach Anspruch 3, **dadurch gekennzeichnet, dass** mindestens eines der Enden der Stoßfänger (11; 12; 17: 18) mit einem Pfropfen verschlossen Ist.

5. Fahrradanhänger nach einem der Ansprüche 1 bis 4, **dadurch gekennzeichnet, dass** ein Im vorderen Bereich des Chassis angeordneter Stoßfänger (12) eine Deichsel trägt,

6. Fahrradanhänger nach Anspruch 5, **dadurch gekennzeichnet, dass** die Delchsel mit dem Stoßfänger (8; 9; 12; 19) lösbar verbunden ist.

7. Fahrradanhänger nach einem der Ansprüche 1 bis 6, **gekennzeichnet durch** mindestens einen Stauraum im Stoßfänger (11; 12; 17; 18).

8. Fahrradanhänger nach einem der Ansprüche 1 bis 7, **gekennzeichnet durch** am Stoßfänger (11; 12; 17; 18) angeordnete Anbauteile, insbesondere Reflektoren und/oder Leuchten.

9. Fahrradanhänger nach einem der Ansprüche 1 bis 8, **dadurch gekennzeichnet, dass** der Stossfänger (11; 12; 17; 18) am Rahmenteil (1; 15; 16) lösbar befestigt, insbesondere daran festgeklemmt oder damit verschraubt ist.

10. Fahrradanhänger nach einem der Ansprüche 1 bis 9, **dadurch gekennzeichnet, dass** der Stoßfänger (11; 12; 17; 18) im Bereich der Höhe der Radnabe angeordnet ist.

## Claims

1. Bicycle trailer, in particular for passenger transport, comprising a chassis made from one or more frame sections, and which has front and/or rear corners, **characterised by** at least one bumper (11; 12; 17; 18) for protecting the front or rear corners, which is arranged on the outside of the chassis on a frame section (1; 15; 16) of the chassis, a front bumper being drawn around the front corners and/or one or two rear bumpers being drawn around the rear corners, and the bumper(s)
- having a greater overall height than the frame part (1; 15; 16)
and/or
- protruding over at least one edge or one end of the frame part (1; 15; 16).

2. Bicycle trailer according to Claim 1, **characterized in that** the bumper (11; 12) protrudes at least partially to the side, sufficiently far beyond the chassis that it at least partially covers the front and/or rear intermediate space between the wheel (6; 7) and the chassis.

3. Bicycle trailer according to one of Claims 1 or 2, **characterized in that** the bumper (11; 12; 17; 18) is a hollow section, in particular a tube.

4. Bicycle trailer according to Claim 3, **characterized in that** at least one of the ends of the bumper (11; 12; 17; 18) is sealed by a plug.

5. Bicycle trailer according to one of Claims 1 to 4, **characterized in that** a bumper (12) arranged in the front region of the chassis carries a drawbar.

6. Bicycle trailer according to Claim 5, **characterized in that** the drawbar is releasably connected to the bumper (8; 9; 12; 19).

7. Bicycle trailer according to one of Claims 1 to 6, **characterized by** at least one storage space in the bumper (11; 12; 17; 18).

8. Bicycle trailer according to one of Claims 1 to 7, **characterized by** attachments arranged on the bumper (11; 12; 17; 18), in particular reflectors and/or lights.

9. Bicycle trailer according to one of Claims 1 to 8, **characterized in that** the bumper (11; 12; 17; 18) is releasably fastened to the frame part (1; 15; 16), in particular clamped thereto or screwed thereto.

10. Bicycle trailer according to one of Claims 1 to 9, **characterized in that** the bumper (11; 12; 17; 18) is arranged in the area which is level with the wheel hub.

## Revendications

1. Remorque de bicyclette, notamment affectée au transport de personnes, présentant un châssis composé d'un ou plusieurs profilé(s) d'encadrement et muni de coins antérieurs et/ou postérieurs, **caractérisée par** au moins un pare-chocs (11 ; 12 ; 17 ; 18) dévolu à la protection desdits coins antérieurs ou postérieurs et disposé à la face extérieure dudit châssis, sur un profilé d'encadrement (1 ; 15 ; 16) dudit châssis, sachant qu'un pare-chocs antérieur est implanté autour des coins antérieurs, et/ou qu'un ou deux pare-chocs postérieur(s) enlace(nt) les coins postérieurs, ledit ou lesdits pare-chocs
- présentant une plus grande hauteur de réalisation que la partie d'encadrement (1; 15; 16),
et/ou
- faisant saillie au moins au-delà d'une arête ou d'une extrémité de ladite partie d'encadrement (1 ; 15 ; 16).

2. Remorque de bicyclette, selon la revendication 1, **caractérisée par le fait que** le pare-chocs (11 ; 12) dépasse au moins en partie au-delà du châssis, dans le sens latéral, d'une distance telle qu'il recouvre, au moins partiellement, l'espace intermédiaire respectivement antérieur ou postérieur qui est situé entre une roue (6 ; 7) et ledit châssis.

3. Remorque de bicyclette, selon l'une des revendications 1 ou 2, **caractérisée par le fait que** le pare-chocs (11 ; 12 ; 17 ; 18) est un profilé creux, en particulier une tubulure.

4. Remorque de bicyclette, selon la revendication 3, **caractérisée par le fait qu'**au moins l'une des extrémités des pare-chocs (11 ; 12 ; 17 ; 18) est obturée par un bouchon.

5. Remorque de bicyclette, selon l'une des revendications 1 à 4, **caractérisée par le fait qu'**un pare-chocs (12), disposé dans la région antérieure du châssis, porte un timon.

6. Remorque de bicyclette, selon la revendication 5, **caractérisée par le fait que** le timon est relié au pare-chocs (8 ; 9 ; 12 ; 19) de manière libérable.

7. Remorque de bicyclette, selon l'une des revendications 1 à 6, **caractérisée par** au moins un espace de rangement, situé dans le pare-chocs (11 ; 12 ; 17 ; 18).

8. Remorque de bicyclette, selon l'une des revendications 1 à 7, **caractérisée par** des pièces rapportées disposées sur le pare-chocs (11 ; 12 ; 17 ; 18), en particulier des réflecteurs et/ou des organes d'éclairage.

9. Remorque de bicyclette, selon l'une des revendications 1 à 8, **caractérisée par le fait que** le pare-chocs (11 ; 12 ; 17 ; 18) est fixé à la partie d'encadrement (1 ; 15 ; 16) de manière libérable, en particulier coincé rigidement ou boulonné sur cette dernière.

10. Remorque de bicyclette, selon l'une des revendications 1 à 9, **caractérisée par le fait que** le pare-chocs (11 ; 12 ; 17 ; 18) est situé dans la région de la hauteur du moyeu des roues.
